# EUROPÄISCHE PATENTSCHRIFT

(11) **EP 0 687 844 B1**
(45) Veröffentlichungstag und Bekanntmachung des Hinweises auf die Patenterteilung: **24.11.1999**
(21) Anmeldenummer: 95103616.9
(22) Anmeldetag: 14.03.1995
(51) Int. Cl.: F16L 3/08, F16L 3/12

(54) **Befestigungsclip zur Fixierung von Rohren und Kabeln**
Fastening clip for pipes and cables
Clip de fixation pour tuyaux et câbles

(30) Priorität: 13.06.1994 DE 9409514 U
(43) Veröffentlichungstag der Anmeldung: 20.12.1995
(73) Patentinhaber: REHAU AG + Co, 95111 Rehau (DE)
(72) Erfinder: Koch, Aloys, c/o REHAU AG + Co, D-95111 Rehau (DE)

(56) Entgegenhaltungen:
- WO-A-93/16312
- DE-U- 1 677 056
- GB-A- 2 126 276
- DATABASE WPI Section PQ, Week 9402 Derwent Publications Ltd., London, GB; Class Q67, AN 94-014771 XP002005532 & SU-A-1 783 219 (MERCHANSKAYA A V) , 23.Dezember 1992

## Beschreibung

Die Erfindung betrifft einen Befestigungsclip zur Befestigung von Rohren und Kabeln, wobei der Clip aus zwei einseitig miteinander verbundenen Halbschellen besteht und auf der der Verbindung gegenüberliegenden Seite an dieser Halbschelle eine Aufnahme aufweist.

Rohre und Kabel müssen insbesondere bei der Installation häufig befestigt werden. Eine derartige Befestigung erfolgt derzeit in der Regel durch Blechschellen, Dübelhaken, Gasrohrhaken oder sogenannte PK-Schellen.

Aus der DE-U-1677 056 ist ein gattungsgemäßer Befestigungsclip zur Fixierung von Rohren und Kabeln bekannt, wobei dieser Clip aus zwei einseitig miteinander verbundenen Halbschellen besteht und auf der der Verbindung gegenüberliegenden Seite an jeder Halbschelle eine Aufnahme aufweist. Dieser aus elastischem Material bestehende Befestigungsclip weist einen mit der Spitze in sich festsitzendes Befestigungsmittel auf und ist mit einem das Kabel oder Rohr aufnehmenden schlitzartigen Ausschnitt versehen. Das Kabel oder Rohr wird von den Halbschellen des Befestigungsclips umgriffen und der Clip mit dem integrierten Rohr oder Kabel wird über das Befestigungsmittel, beispielsweise einen Stahlnagel, an dem zu befestigenden Objekt fixiert. Derartige Befestigungen können jedoch in Längsrichtung des Rohres oder Kabels nicht als Fixpunkt angesehen werden, sondern dienen nur dazu, ein horizontales oder vertikales Verschieben zu vermeiden. In der modernen Montagetechnik werden immer häufiger Kunststoffrohre eingesetzt, bei denen Fixpunkte von großer Bedeutung sind.

Aufgabe der Erfindung war es, einen Befestigungsclip so zu gestalten, daß dieser bei einfacher Montage gleichzeitig zu der allgemeinen Rohrbefestigung einen sicheren Fixpunkt bietet, wobei die Gefahr des Eindrückens des Rohres oder Kabels komplett vermieden werden sollte.

Diese Aufgabe ist durch den Befestigungsclip nach den Ansprüchen 1 bis 4 gelöst.

Dieser Clip zeichnet sich dadurch aus, daß der Innenradius der Halbschellen kleiner ist als der Außenradius des zu befestigenden Rohres oder Kabels, daß sich im verspannten Zustand durch die beiden Innenradien eine annähernd runde Aufnahme ergibt, daß die Wandstärken der Halbschellen so ausgestaltet sind, daß sich der Innenradius der Halbschellen bei der Verspannung über dem Rohr oder Kabel in horizontaler Ebene weitet und die beiden Halbschellen vertikal aufeinander zugezogen werden. Außerdem sind die Aufnahmen im unverspannten Zustand aufgespreizt und im verspannten zusammengepreßt. Dieser Clip wird über das zu befestigende Rohr oder Kabel geclipst. Anschließend wird eine Schraube durch die beiden Aufnahmen des Clipses geführt und dann z. B. in den zuvor in ein Bohrloch eingeführten Spreizdübel geschraubt. Beim Anziehen der Schraube wird der Clip gleichmäßig um das Rohr oder Kabel verspannt. Die gleichmäßige Verspannung wird dadurch erreicht, daß sich die beiden Halbschellen des Clipses horizontal weiten und beide Halbschellen vertikal aufeinander zugezogen werden. Diese über dem gesamten Außendurchmesser gleichmäßige Druckverteilung erlaubt einen deutlich höheren Gesamtanpreßdruck, ohne daß eine Beschädigung am zu befestigenden Rohr oder Kabel zu fürchten ist, da sich die Drücke über dem Radius des Rohres zum Teil gegenseitig aufheben bzw. das Rohr oder Kabel durch den entsprechenden Gegendruck in sich stabilisiert wird. Hierdurch ist es möglich, einen Anpreßdruck aufzubauen, der bei entsprechender Breite des Clipses ausreicht, eine Axialverschiebung des Rohres oder Kabels zu verhindern, wodurch diese Befestigung einen Montagefixpunkt darstellt.

Damit nicht ein zusätzlicher Druckpunkt entsteht, der die Gleichmäßigkeit des Anpreßdrucks über dem gesamten Außenradius des Rohres oder Kabels stören würde, müssen die Aufnahmen für die Schraube tiefer sein als der Außendurchmesser des umgreifenden Clipses.

Im folgenden wird der erfindungsgemäße Befestigungsclips anhand schematischer Darstellung näher erläutert. Es zeigt:
- Figur 1: zeigt einen Befestigungsclip in unmontiertem Zustand
- Figur 2: zeigt einen montierten, noch nicht verschraubten Befestigungsclip
- Figur 3: zeigt einen montierten, verspannten Befestigungsclip Montagefixpunkt.

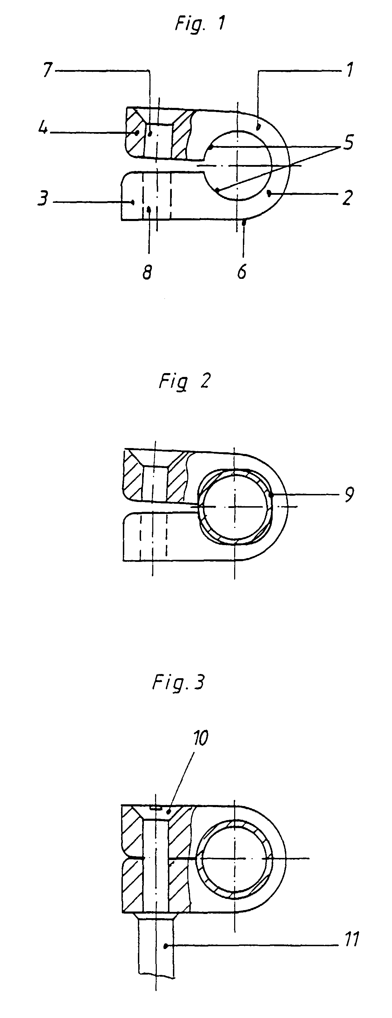

Der in Figur 1 gezeigte Clip besteht aus den beiden Halbschellen 1, 2, die gegenüber den Aufnahmen 3, 4 einstückig hintereinander verbunden sind. Diese einstückige Verbindung begründet eine gewisse Federwirkung, welche die Aufnahmen 3, 4 in unbelastetem Zustand aufspreizt.

In aufgespritztem, d. h. unbelastetem Zustand des Clips ist der Innenradius 5 der Halbschellen 1, 2 größer als der Außenradius des zu befestigenden Rohres oder Kabels, so daß dieses z. B. leicht in dem lichten Aufnahmeraum zwischen den beiden Halbschellen 1, 2 eingezogen werden kann. Die Federmöglichkeit der einstückigen Verbindung der beiden Halbschellen 1, 2 ist jedoch so groß, daß diese über die Aufnahmen 3, 4 auch über das Kabel oder Rohr gedrückt werden kann, so daß der runde Querschnitt des Rohres oder Kabels in den lichten Umfang des vom Innenradius 5 der Halbschellen begrenzten Aufnahmeraumes einschnappt.

Die Aufnahmen 3, 4 besitzen eine durchgehende Bohrung 7, 8, durch die eine die Verspannung des Clips bewirkende in Figur 1 nicht dargestellte Spannschraube greift.

Figur 2 zeigt den Clip mit in den Aufnahmeraum der unverspannten Halbschellen 1, 2 eingesetzten Kabelrohr 9. Die anderen Merkmale der Darstellung sind die gleichen wie in Figur 1.

In Figur 3 ist der verspannte Clip dargestellt, wobei die Aufnahmen 3, 4 durch die Spannschraube 10, die in dem Wanddübel 11 verschraubt ist, zusammengepreßt werden. Dabei wird das Kabel oder Rohr 9 aufgrund der Tatsache, daß die Dicke der Aufnahmen 3, 4 geringer ist als der Außenradius 6 der Halbschellen 1, 2 über dem Innenradius 5 fest verpreßt, so daß auf diese Weise sogar ein Festpunkt in der Verlegung erzielt werden kann.

## Patentansprüche

1. Befestigungsclip zur Fixierung von Rohren oder Kabeln, wobei der Clip aus zwei einseitig miteinander verbundenen Halbschellen (1, 2) besteht und auf der der Verbindung gegenüberliegenden Seite an jeder Halbschelle (1, 2) eine im unverspannten Zustand aufgespreizte Aufnahme (3, 4) aufweist,
dadurch gekennzeichnet,
daß der Innenradius (5) der Halbschellen (1, 2) kleiner ist als der Außenradius des zu befestigenden Rohres oder Kabels, daß sich im verspannten Zustand durch die beiden Innenradien (5) eine annähernd runde Aufnahme ergibt, daß die Wandstärken der Halbschellen (1, 2) so ausgestaltet sind, daß sich der Innenradius (5) der Halbschellen (1, 2) bei der Verspannung über dem Rohr oder Kabel in horizontaler Ebene weitet, die beiden Halbschellen (1, 2) vertikal aufeinander zugezogen werden und die Aufnahmen (3, 4) zusammengepreßt sind.

2. Befestigungsclip nach einem der vorgenannten Ansprüche, dadurch gekennzeichnet, daß die Aufnahmen (3, 4) eine Dicke aufweisen, die geringer ist, als der Außenradius (6) der Halbschellen (1, 2).

3. Befestigungsclip nach einem der vorgenannten Ansprüche, dadurch gekennzeichnet, daß die Aufnahmen (3, 4) jeweils in Tiefenrichtung eine Bohrung (7, 8) zur Aufnahme der Verspannschraube (10) aufweisen.

4. Befestigungsclip nach einem der vorgenannten Ansprüche, dadurch gekennzeichnet, daß es sich um ein einstückiges Kunststoffteil aus einem Material hoher Eigenfestigkeit handelt.

## Claims

1. Clip for fixing pipes or cables, with the clip consisting of two half clamps (1, 2) connected together at one side and, on the side opposite the connection, exhibiting a holder (3, 4) on each half clamp (1, 2) that is spread apart in the unclamped state,
characterised by the fact
that the inside radius (5) of half clamps (1, 2) is smaller than the outside radius of the pipe or cable being fixed, that an more or less round holder is produced in the clamped state, that the wall thicknesses of half clamps (1, 2) are configured in such a way that the inside radius (5) of half clamps (1, 2) widens out horizontally when clamped over the pipe or cable, the two half clamps (1, 2) are pulled towards each other and the holders (3, 4) are pressed together.

2. Fixing clip as described in any of the above claims, characterised by the fact that the holders (3, 4) are smaller in thickness that the outside radius (6) of half clamps (1, 2).

3. Fixing clip as described in any of the above claims, characterised by the fact that the holders (3, 4) each exhibit a vertical hole (7, 8) to accommodate the clamping screw (10).

4. Fixing clip as described in any of the above claims, characterised by the fact that it is a plastic part manufactured in one piece from a material of high inherent strength.

## Revendications

1. Clips de fixation de tubes et câbles, constitué de deux demi-coquilles (1, 2) assemblées entre elles par un côté, présentant sur le côté opposé à la jonction un logement écarté (3, 4) à l'état non fixé,
caractérisé en ce que
le rayon intérieur (5) des demi-coquilles (1, 2) est inférieur au rayon extérieur du tube ou câble à fixer, en ce qu'à l'état fixé, les deux rayons intérieurs (5) forment un logement pratiquement circulaire, en ce que les épaisseurs de paroi des demi-coquilles (1,2) sont conçues de telle sorte que le rayon intérieur (5) des demi-coquilles (1,2) s'élargisse sur un plan horizontal lorsque le clips est fixé sur le tube ou le câble, les deux demi-coquilles (1, 2) se rapprochent verticalement et les logements (3,4) se pressent l'un contre l'autre.

2. Clips de fixation selon l'une des revendications précédentes, caractérisé en ce que les logements (3, 4) ont une épaisseur plus faible que le rayon extérieur (6) des demi-coquilles (1, 2).

3. Clips de fixation selon l'une des revendications précédentes, caractérisé en ce que les logements (3, 4) présentent respectivement un orifice (7, 8) dans le sens de la profondeur pour le logement de la vis de retenue (10).

4. Clips de fixation selon l'une des revendications précédentes, caractérisé en ce qu'il s'agit d'un article plastique d'une seule pièce, fabriqué dans une matière très résistante.
